# EUROPEAN PATENT APPLICATION

(11) **EP 4 510 267 A2**
(43) Date of publication of application: **19.02.2025**
(21) Application number: 24194154.1
(22) Date of filing: 12.08.2024
(51) Int. Cl.: H01M 10/0525, H01M 10/054, H01M 10/0565, H01M 10/058

(54) **SEMI-SOLID STATE BATTERY AND PREPARATION METHOD THEREFOR**

(30) Priority: 17.08.2023 CN 202311036215
(71) Applicant: REPT BATTERO Energy Co., Ltd., 325000 Wenzhou Zhejiang (CN); Shanghai Ruipu Energy Co., Ltd., Shanghai 201206 (CN)
(72) Inventor: Cao, Hui, Zhejiang, 325000 (CN); Cui, Yi, Shanghai, 201206 (CN); Hou, Min, Shanghai, 201206 (CN); Tang, Panpan, Zhejiang, 325000 (CN); Liu, Chan, Shanghai, 201206 (CN)
(74) Representative: Potter Clarkson

(57) **Abstract**

The present invention relates to the technical field of battery technology, particularly a semi-solid state battery and a preparation method therefor. A semi-solid state battery, the semi-solid state battery comprises a cell and a gel electrolyte, the cell comprises a cathode plate and an anode plate, wherein a three-dimensional network structure coating is set on the cathode plate and/or the anode plate; raw materials for preparing the three-dimensional network structure coating comprises: a fiber material and an initiator; the gel electrolyte is condensed by a reaction of electrolyte precursor solution and the initiator; the electrolyte precursor solution comprises: a monomer and a cross-linking agent. A semi-solid state battery of the present invention has low resistance, high specific capacity, and good electrical performance and safety performance.

## Description

### Technical Field

The present invention relates to the technical field of battery technology, particularly a semi-solid state battery and a preparation method therefor.

### Background Technology

At present, commercial secondary batteries conventionally use liquid electrolytes, which comprise a large amount of flammable and leaky small molecule organic carbonate solvents, causing major safety hazards. However, the use of solid electrolytes or semi-solid electrolytes to replace traditional electrolytes can effectively avoid the leakage and volatilization of electrolytes, thus it is an effective means to avoid the safety hazards of secondary batteries. Generally, semi-solid/solid electrolytes can be divided into organic polymer electrolytes and inorganic solid electrolytes, which can be specifically subdivided into solid polymer electrolytes, gel polymer electrolytes, polyelectrolytes, composite polymer electrolytes and inorganic electrolytes.

However, it is difficult for current batteries made of conventional gel electrolytes to achieve the same electrical performance level of liquid electrolytes. The main reasons are that the polymerization inside the gel electrolyte is not uniform, and the ion transmission path is blocked; and the electron conduction between the active materials caused by the polymerization inside the battery plate is blocked, resulting in rapid performance decay.

Therefore, it is of great significance to provide a semi-solid state battery with uniform gel electrolyte polymerization and excellent electrochemical performance.

### Summary of the Invention

The purpose of the present invention is to overcome the problems existing in the prior art mentioned above and to provide a semi-solid state battery and a preparation method therefor.

The present invention is fulfilled through the following technical solutions:
The present invention relates to a semi-solid state battery, which comprises a cell and a gel electrolyte. A cell comprises a cathode plate and an anode plate. A three-dimensional network structure coating is set on a cathode plate and/or an anode plate. Raw materials for preparing a three-dimensional network structure coating comprise: a fiber material and an initiator. A gel electrolyte is condensed by a reaction of electrolyte precursor solution and an initiator. Electrolyte precursor solution comprises a monomer and a cross-linking agent.

A coating set on an electrode plate of the present invention comprises a fiber material, which can form a three-dimensional network structure on a surface of a battery plate, and anchor an initiator inside the three-dimensional network structure through hydrogen bond. Then, a monomer and a cross-linking agent for thermal polymerization are added to electrolyte precursor solution, which can be polymerized at an interface of a battery plate under an action of an initiator to form a gel electrolyte, so that the gel electrolyte of a semi-solid state battery is uniformly polymerized and achieves excellent electrochemical performance. The present invention can control a polymerization site by fixing an initiator position through a three-dimensional network structure coating. On the one hand, it can effectively control an uniformity of polymerization and prevent a poor electrochemical performance caused by a blockage of ion transmission channels due to uneven polymerization. On the other hand, a polymerization reaction can be controlled to only occur at an interface of an electrode plate, so that a polymerization inside an electrode plate and among active particles can be prevented, and a poor dynamic performance caused by a blocked electron conduction among active substances can be avoided.

As a preferred embodiment of a semi-solid state battery of the present invention, a preparation method for a three-dimensional network structure coating comprises: dispersing a fiber material and an initiator in a solvent I, stirring evenly to obtain a three-dimensional network structure coating slurry, coating the three-dimensional network structure coating slurry on a cathode plate and/or an anode plate, and drying. A mass ratio of a fiber material to **an** initiator is 1: **(0.02-0.3).** Preferably, a drying temperature is 60°C-100°C.

The present invention has found that when a fiber material and an initiator adopt the mass ratio above, the initiator can be evenly distributed in a three-dimensional network structure coating and firmly anchored, which is conducive to the subsequent uniform polymerization of gel electrolytes. Further, a mass ratio of a fiber material to an initiator can be (but not limited to) 1: 0.02, 1: 0.05, 1: 0.1, 1: 0.15, 1: 0.2, 1: 0.25 or 1: 0.3.

When preparing a three-dimensional network structure coating, the type of a solvent I is not limited, and it can be water or an organic solvent; preferably, a solvent I can be water or N-methylpyrrolidone. In some embodiments, a three-dimensional network structure coating is set on a cathode plate, and a solvent I is N-methylpyrrolidone. In some embodiments, a three-dimensional network structure coating is set on an anode plate, and a solvent I is water.

As a preferred embodiment of the semi-solid state battery, raw materials for preparing a three-dimensional network structure coating also comprise a ceramic material. Conventionally, a ceramic material comprises at least one of aluminum oxide, titanium dioxide, silicon dioxide, zirconium oxide, aluminum hydroxide, magnesium hydroxide, NASICON-type solid electrolyte, perovskite-type solid electrolyte, LISICON-type solid electrolyte, and garnet-type solid electrolyte. A molecular formula of NASICON-type solid electrolyte is Li₁₊ₓTi₂₋ₓMₓ(PO₄)₃ or Li₁₊ₓGe₂₋ₓMₓ(PO4)₃, wherein 0.1<x<0.7, and M comprises at least one of Al, Ga, In, and Sc. A molecular formula of perovskite-type solid electrolyte is Li₃ₓLa_{(2/3)-x}TiO₃, wherein 0<x<0.16. A molecular formula of LISICON-type solid electrolyte is Li₁₄ZnGe₄O₁₆. A molecular formula of garnet-type solid electrolyte is Li₅La₃M₂O₁₂ or Li₁₇La₃Zr₂O₁₂, wherein M comprises at least one of Ta and Nb.

In raw materials for preparing a three-dimensional network coating of the present invention, a mass ratio of a fiber material to a ceramic material can be 1: (0-5), for example, 1: 0.1, 1: 0.2, 1: 0.5, 1: 1, 1: 2, 1: 3, 1: 4.

In a coating of the present invention, a ceramic material can also be further added to construct a three-dimensional network skeleton together with a fiber material. A ceramic material can be the oxide, hydroxide or inorganic solid electrolyte mentioned above. Preferably, when a solid electrolyte material of the above type is used as a ceramic material in the coating, the rigidity and ionic conductivity of an electrolyte can be effectively increased. The rigidity of an electrolyte can effectively avoid internal short circuits because of the growth of lithium dendrites, which can further improve the safety performance and electrochemical performance of a battery.

As a preferred embodiment of a semi-solid state battery of the present invention, raw materials for preparing a three-dimensional network structure coating also comprise a dispersant and a binder. A mass ratio of a fiber material and a dispersant can be 1: (0-0.05), such as 1: 0.01, 1: 0.02, 1: 0.03, 1: 0.04. A mass ratio of a fiber material and a binder can be 1: (0-0.2), such as 1: 0.01, 1: 0.02, 1: 0.05, 1: 0.1, 1: 0.15. In some embodiments, in raw materials for preparing a three-dimensional network structure coating of the present invention, a mass ratio of a fiber material, a dispersant, a binder, and a ceramic material is 1: (0-0.05): (0.01-0.2): (0-5).

Preferably, a mass ratio of a fiber material, a dispersant, a binder, and a ceramic material is 1: (0.01-0.05): (0.01-0.2): (0.1-5). For example, a mass ratio of a fiber material, a dispersant, a binder, and a ceramic material can be (but not limited to) 1: 0.01: 0.01: 0.1, 1: 0.02: 0.02: 0.2, 1: 0.02: 0.02: 0.5, 1: 0.01: 0.01: 1, 1: 0.01: 0.01: 2, 1: 0.01: 0.01: 3, 1: 0.01: 0.01: 4, 1: 0.01: 0.01: 5, 1: 0.03: 0.1: 0.5, 1: 0.04: 0.2: 0.5, or 1: 0.05: 0.15: 0.5.

Preferably, a preparation method for a three-dimensional network structure coating is: dispersing a fiber material in a solvent I, adding other raw materials for preparing a three-dimensional network structure coating, such as dispersants, binders, ceramic materials, and initiators, stirring them evenly to obtain a three-dimensional network structure coating slurry, coating the three-dimensional network structure coating slurry on a cathode plate and/or an anode plate, and drying.

As a preferred embodiment of a semi-solid state battery of the present invention, at least one of the following is satisfied:
(1-1) a fiber material comprises at least one of cellulose nanofibers, cellulose nanocrystals, glass fibers, silica nanofibers, silicate fiber materials, polyester fibers, and polyarylamide fibers;
(1-2) an initiator comprises at least one of azobisisobutyronitrile, azobisisoheptanenitrile, 2-methylpropionate, benzoyl peroxide, tert-butyl peroxybenzoate, 2-butanone peroxide, stannous octoate, lithium acetate, triethylphosphine, triphenylphosphine, tributylphosphine, bis(tributyltin) oxide, tetrabutyl titanate, zirconium n-butoide, trialkyltin alkoxide, dialkyltin oxide, N-methylethylenediamine, dimethylformamide, triethylene ethylenediamine, N-methyldiethanolamine, triethylenediamine, aluminum trifluoromethanesulfonate, magnesium trifluoromethanesulfonate, lithium bis(fluorosulfonyl)imide and stannous trifluoromethanesulfonate;
(1-3) a dispersant comprises at least one of isopropyl alcohol, triolein, oleic acid, terpineol, triethyl phosphate, triethylhexyl phosphate, sodium dodecyl sulfate, 4-methyl-2-pentanol, cellulose derivatives, polyacrylamide, and polyethylene glycol fatty acid;
(1-4) a binder comprises at least one of polyvinylidene fluoride, poly(methyl methacrylate), polyacrylonitrile, polyimide, styrene butadiene rubber, poly(acrylic acid), and sodium carboxymethyl cellulose.

Preferably, a fiber material comprises at least one of cellulose nanofibers, cellulose nanocrystals, polyester fibers, and polyarylamide fibers.

The selection of the above preferred fiber material enables a semi-solid state battery to have better electrochemical performance.

As a preferred embodiment of a semi-solid state battery of the present invention, a diameter of a fiber material is 50 nm-200 nm, and a length of a fiber material is 0.5 µm-5 µm. For example, a diameter of a fiber material can be 50 nm, 100 nm, 150 nm, 200 nm, and a length of a fiber material can be 0.5 µm, 1 µm, 2 µm, 3 µm, 4 µm, 5 µm. The fiber material within the diameter and length range can make a semi-solid state battery have a better electrochemical performance. If a diameter of a fiber material is too small, it is difficult for preparation of a coating. If a diameter of a fiber material is too large, it is unable to form a three-dimensional network structure at the nanoscale, affecting the anchoring of an initiator in a coating. A length of a fiber material is within 0.5 µm-5 µm, so that the flexibility and the winding property of the fiber material are in a proper degree, thereby obtaining a three-dimensional network structure.

As a preferred embodiment of a semi-solid state battery of the present invention, a thickness of a three-dimensional network structure coating on either side of a cathode plate or an anode plate in thickness direction is 3 µm-20 µm. For example, a thickness of a three-dimensional network structure coating on either side of a cathode plate or an anode plate in thickness direction can be (but not limited to) 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm or 20 µm.

As a preferred embodiment of a semi-solid state battery of the present invention, a coating surface density of a three-dimensional network structure coating on either side of a cathode plate or an anode plate in thickness direction is 2 mg/cm²-17 mg/cm². For example, a coating surface density of a three-dimensional network structure coating on either side of a cathode plate or an anode plate in thickness direction can be (but not limited to) 2 mg/cm², 3 mg/cm², 4 mg/cm², 5 mg/cm², 6 mg/cm², 7 mg/cm², 8 mg/cm², 9 mg/cm², 10 mg/cm², 11 mg/cm², 12 mg/cm², 13 mg/cm², 14 mg/cm², 15 mg/cm², 16 mg/cm² or 17 mg/cm².

In the present invention, a coating with the above thickness and coating surface density is selected to ensure the polymerization uniformity of an electrolyte and improve the performance of a battery.

Preferably, electrolyte precursor solution further comprises an alkali metal salt, an additive and a solvent II.

As a preferred embodiment of a semi-solid state battery of the present invention, by mass percentage, electrolyte precursor solution comprises: 0.7-1.5 mol/L of an alkali metal salt, 0.5%-5% of an additive, 3%-7% of a monomer and 0.2%-1.5% of a cross-linking agent, and a balance is a solvent II. In some embodiments, a concentration of an alkali metal salt in the electrolyte precursor solution is 0.7-1.5 mol/L, such as 0.8 mol/L, 0.9 mol/L, 1.0 mol/L, 1.1 mol/L, 1.2 mol/L, 1.3 mol/L, 1.4 mol/L. In some embodiments, the mass percentage of an additive in the electrolyte precursor solution is 0.5%-5%, such as 1%, 2%, 3%, 4%. In some embodiments, the mass percentage of a monomer in the electrolyte precursor solution is 3%-7%, such as 4%, 5%, 6%. In some embodiments, the mass percentage of a cross-linking agent in the electrolyte precursor solution is 0.2%-1.5%, such as 0.5%, 0.8%, 1%, or 1.2%.

As a preferred embodiment of a semi-solid state battery of the present invention, at least one of the following is satisfied:
(2-1) a solvent II comprises at least one of vinylene carbonate, propylene carbonate, diethyl carbonate, ethyl methyl carbonate, dimethyl carbonate, methyl propyl carbonate, ethyl propionate, propyl propionate, ethyl acetate, ethyl butyrate, propyl acetate, γ-butyrolactone, fluoroethylene carbonate, fluoropropylene carbonate, 3,3,3-trifluoropropylene carbonate, methyl 2,2,2-trifluoroethyl ester and bis (2,2,2-trifluoroethyl) carbonate;
(2-2) an alkali metal salt comprises one of a lithium salt, a potassium salt and a sodium salt;
(2-3) an additive comprises at least one of tris(2,2,2-trifluoroethyl)phosphite, fluoroethylene carbonate, vinylene carbonate, di-fluoro ethylene carbonate, ethylene sulfate, prop-1-ene-1,3-sultone, haloalkyl phosphate;
(2-4) a monomer comprises at least one of vinyl acetate, dimethyl allylmalonate , diethyl allylmalonate, dimethallyl carbonate, 1,4-butanediol diacrylate, hexamethylene diacrylate, methyl methacrylate, butyl methacrylate, vinylene carbonate, 4-vinyl-1,3-dioxolan-2-one, methyl vinyl sulfone, ethyl vinyl sulfone, ethoxylated trimethylolpropane triacrylate, pentaerythritol triacrylate, pentaerythritol tetraacrylate, dipentaerythritol pentaacrylate, dipentaerythritol hexaacrylate, acrylamide, N,N-methylenebisacrylamide, caprolactam, 2-pyrrolidinone, maleic anhydride, acrylonitrile, ethyl 2-cyanoacrylate, enbucrilate, octocrylene, 1-cyclohexene-1-acetonitrile, hexafluorobutyl methacrylate, trifluoroethyl methacrylate, polyethylene glycol) methacrylate, poly(ethylene glycol) dimethacrylate, poly(ethylene glycol) diacrylate, ethoxyethyl acrylate, polyethylene glycol, 1,3 dioxolane, 1,4-dioxane, vinylmethoxysilane, 2-(trimethylsiloxy)ethyl methacrylate, trivinylcyclotrisiloxane, vinyl tris(2-methoxyethoxy) silane;
(2-5) a cross-linking agent comprises at least one of poly(ethylene glycol) diacrylate, poly(ethylene glycol) dimethacrylate, trimethylolpropane trimethacrylate, pentaerythritol tetraacrylate, pentaerythritol triacrylate, ethoxylated trimethylolpropane triacrylate and polyether acrylate.

As a preferred embodiment of a semi-solid state battery of the present invention, a battery comprises a lithium ion battery, a sodium ion battery or a potassium ion battery.

As a preferred embodiment of a semi-solid state battery of the present invention, when a battery is a lithium ion battery, an alkali metal salt in electrolyte precursor solution is a lithium salt.

A lithium salt comprises at least one of lithium hexafluorophosphate, lithium difluorophosphate, lithium nitrate, lithium perchlorate, lithium bis(oxalato)borate, lithium difluoro(oxalate)borate, lithium bisoxalatodifluorophosphate, lithium tetrafluoro(oxalato)phosphate, lithium tetrafluoroborate, lithium bis(fluorosulfonyl)imide and lithium bis(trifluoromethanesulphonyl)imide.

As a preferred embodiment of a semi-solid state battery of the present invention, when a battery is a sodium ion battery, an alkali metal salt in electrolyte precursor solution is a sodium salt.

As a preferred embodiment of a semi-solid state battery of the present invention, when a battery is a potassium ion battery, an alkali metal salt in electrolyte precursor solution is a potassium salt.

As a preferred embodiment of a semi-solid state battery of the present invention, a battery is a lithium ion battery.

Another object of the present invention is to provide a preparation method for a semi-solid state battery, comprising the following steps:
S 1: applying a three-dimensional network structure coating slurry on the surface of a cathode plate and/or an anode plate, and drying it;
S2: making the cathode plate, the anode plate obtained in S1 into a cell;
S3: injecting electrolyte precursor solution into the cell, sealing, aging, heating to 40 °C-90 °C for thermal polymerization for 20 min-48 h, cooling and standing to obtain the semi-solid state battery.

In the present invention, a coating containing an initiator and a fiber material is coated to a plate, which can anchor the initiator in a three-dimensional network structure of the coating, and electrolyte precursor solution reacts with the initiator through thermal polymerization, so that a gel electrolyte with uniform polymerization is obtained, thereby improving an electrochemical performance of a battery.

Preferably, in S 1, a method for coating is gravure, transfer, extrusion or spraying; and a drying temperature is 60 °C-100 °C.

Preferably, in S2, a cathode plate, an anode plate and a separator are made into a cell by lamination or winding.

Preferably, in S3, an aging temperature is 40 °C-50 °C.

The present invention has the following beneficial effects: A coating set on an electrode plate of the present invention comprises a fiber material, which can form a three-dimensional network structure on a surface of a battery plate, and anchor an initiator inside the three-dimensional network structure through hydrogen bond, to control a polymerization site. Then, a monomer and a cross-linking agent for thermal polymerization are added to electrolyte precursor solution, which can be polymerized at an interface of a battery plate under an action of an initiator to form a gel electrolyte. On the one hand, it can effectively control an uniformity of polymerization and prevent a poor electrochemical performance caused by a blockage of ion transmission channels due to uneven polymerization. On the other hand, a polymerization reaction can be controlled to only occur at an interface of an electrode plate, so that a polymerization inside an electrode plate and among active particles can be prevented, and a poor dynamic performance caused by a blocked electron conduction among active substances can be avoided. A semi-solid state battery of the present invention has low resistance, high specific capacity, and good electrical performance and safety performance.

### Detailed Description

To illustrate the purpose, technical solutions and advantages of the present invention more clearly, the present invention will be further described below in conjunction with specific embodiments. It should be understood by those skilled in the art that the specific embodiments described herein are only used to explain the present invention and are not intended to limit the present invention.

Unless otherwise specified, the experimental methods used in the examples are all conventional methods; materials, reagents, etc. used, unless otherwise specified, can be obtained from commercial channels.

Silicon-carbon anode active material used in examples and comparative examples is purchased from Lanxi Zhide New Energy Materials Co., Ltd. with a brand number of S0332. Perovskite-type solid electrolyte lithium lanthanum titanate powder (LLTO) used in examples and comparative examples is purchased from LionGo New Energy Co., Ltd. with a brand number of LG1522. NASICON-type solid electrolyte powder lithium aluminum titanium phosphate (LATP) used in examples and comparative examples is purchased from BTR New Material Group Co., Ltd. with a brand number of BEO-1S.

### Example 1

A semi-solid state lithium ion battery comprises a cell and a gel electrolyte, wherein the cell comprises a cathode plate, an anode plate, and a separator between the cathode and anode plate, and a three-dimensional network structure coating is set on the anode plate. A preparation method for a semi-solid state lithium ion battery comprises following steps:
S1. preparing a cathode plate: mixing a cathode active material LiNi_{0.8}Co_{0.1}Mn_{0.1}O₂ (NCM811), a conductive agent conductive carbon black (sp), a conductive agent carbon nanotubes, and a binder polyvinylidene fluoride evenly in N-methyl-2-pyrrolidone at a mass ratio of 96:2:0.5:1.5 to obtain a cathode slurry, coating the cathode slurry on one side of a current collector aluminum foil, drying and rolling at 120 °C, then coating and drying the cathode slurry on the other side of the aluminum foil according to the above method, and then carrying out cold pressing treatment on the plate of which the two sides of the aluminum foil are coated with a cathode active material layer, trimming and cutting, to obtain a lithium ion battery cathode plate;
S2. preparing a three-dimensional network structure coating slurry: adding cellulose nanofiber of 0.3 kg, triethyl phosphate (dispersant) of 6 g and styrene butadiene rubber SBR binder of 0.03 kg to deionized water of 3.5 kg, and stirring them fully, then adding 30 g azobisisobutyronitrile initiator, and mixing them evenly to obtain the three-dimensional network structure coating slurry; a diameter of a fiber material cellulose nanofiber is 50-100 nm, and a length of a fiber material cellulose nanofiber is 0.5 µm-2 µm;
S3. preparing an anode plate: mixing a silicon-carbon anode active material, a conductive agent sp, a thickener sodium carboxymethyl cellulose and a binder styrene butadiene rubber evenly in deionized water at a mass ratio of 96:1.5:1.0:1.5 to obtain an anode slurry, coating the anode slurry on one side of a current collector copper foil, drying and rolling at 105 °C, then coating and drying the anode slurry on the other side of the copper foil according to the above method, and then carrying out cold pressing treatment on the plate of which the two sides of the copper foil are coated with an anode active material layer to obtain a lithium ion battery anode plate;
S4. setting a three-dimensional network structure coating on the anode plate: then, coating the three-dimensional network structure coating slurry prepared in S2 on the anode active material layer twice on both sides of the anode plate obtained in S3 by a transfer coating machine, and a drying temperature is 85 °C; after drying, a coating surface density of the three-dimensional network structure coating on either side of the anode plate in thickness direction is 7.3 mg/cm², and a thickness of the three-dimensional network structure coating on either side of the anode plate in thickness direction is 6 µm; after trimming and cutting, an anode plate of a lithium ion battery with a total thickness of 102 µm is prepared;
S5. preparing a cell: selecting polyethylene porous film with a thickness of 9 µm as a separator, winding the cathode plate, the separator and the anode plate set with the three-dimensional network structure coating into a cell, and a capacity of the cell is about 10 Ah, the separator is located between adjacent cathode and anode plate, the cathode plate is led out by spot welding of an aluminum electrode lug, and the anode plate is led out by spot welding of a nickel electrode lug;
S6. preparing electrolyte precursor solution: stirring a reaction monomer vinylene carbonate (VC) and a cross-linking agent polyethylene glycol) diacrylate (PEGDA) completely for 4 h, adding them into a solvent (the solvent formula is a mixed solution of propylene carbonate (PC): ethylene carbonate (EC): dimethyl carbonate (DMC) with a volume ratio of 1:1:1), and then adding lithium hexafluorophosphate (LiPF₆) and an additive tris(2,2,2-trifluoroethyl)phosphite (TTFP), stirring completely; in electrolyte precursor solution, a content of a reaction monomer is 5 wt%; a content of a cross-linking agent is 1.2 wt%; a concentration of LiPF₆ is 1 mol/L, a content of an additive is 5 wt%, and a balance is solvent;
S7. preparing a battery: placing the cell obtained in S5 in an aluminum-plastic packaging bag, baking, then injecting the above electrolyte precursor solution, sealing, forming, aging at 40 °C, heating to 60 °C for thermal polymerization for 12 h, and then cooling to 40 °C and standing, to obtain the semi-solid state lithium ion battery.

### Example 2

A semi-solid state lithium ion battery comprises a cell and a gel electrolyte, wherein the cell comprises a cathode plate, an anode plate and a separator between the cathode and anode plate, and a three-dimensional network structure coating is set on the anode plate. A preparation method for a semi-solid state lithium ion battery comprises following steps:
S1. preparing a cathode plate: mixing a cathode active material NCM811, a conductive agent sp, a conductive agent carbon nanotubes, and a binder polyvinylidene fluoride evenly in N-methyl-2-pyrrolidone at a mass ratio of 96:2:0.5:1.5 to obtain a cathode slurry, coating the cathode slurry on one side of a current collector aluminum foil, drying and rolling at 120 °C, then coating and drying the cathode slurry on the other side of the aluminum foil according to the above method, and then carrying out cold pressing treatment on the plate of which the two sides of the aluminum foil are coated with a cathode active material layer, trimming and cutting, to obtain a lithium ion battery cathode;
S2. preparing a three-dimensional network structure coating slurry: adding cellulose nanofiber of 0.3 kg, perovskite-type solid electrolyte lithium lanthanum titanate powder (LLTO, Li₃ₓLa_{(2/3)-x}TiO₃) of 0.15 kg, triethyl phosphate of 6 g and styrene butadiene rubber SBR binder of 0.03 kg to deionized water of 3.5 kg, and stirring them fully, then adding 30 g azobisisobutyronitrile initiator, and mixing them evenly to obtain the three-dimensional network structure coating slurry; a diameter of a fiber material cellulose nanofiber is 50 nm-100 nm, and a length of a fiber material cellulose nanofiber is 0.5 µm-2 µm;
S3. preparing an anode plate: mixing a silicon-carbon anode active material, a conductive agent sp, a thickener sodium carboxymethyl cellulose and a binder styrene butadiene rubber evenly in deionized water at a mass ratio of 96:1.5:1.0:1.5 to obtain an anode slurry, coating the anode slurry on one side of a current collector copper foil, drying and rolling at 105 °C, then coating and drying the anode slurry on the other side of the copper foil according to the above method, and then carrying out cold pressing treatment on the plate of which the two sides of the copper foil are coated with an anode active material layer, to obtain a lithium ion battery anode;
S4. setting a three-dimensional network structure coating on the anode plate: then, coating the three-dimensional network structure coating slurry on the anode active material layer twice on both sides of the anode plate by a transfer coating machine, and a drying temperature is 95 °C; after drying, a coating surface density of the three-dimensional network structure coating on either side of the anode plate in thickness direction is 9.3 mg/cm², and a thickness of the three-dimensional network structure coating on either side of the anode plate in thickness direction is 6 µm; after trimming and cutting, an anode plate of a lithium ion battery with a total thickness of 102 µm is prepared;
S5. preparing a cell: selecting polyethylene porous film with a thickness of 9 µm as a separator, winding the cathode plate, the separator and the anode plate set with the three-dimensional network structure coating into a cell, and a capacity of the cell is about 10 Ah, the separator is located between adjacent cathode and anode plate, the cathode plate is led out by spot welding of an aluminum electrode lug, and the anode plate is led out by spot welding of a nickel electrode lug;
S6. preparing an electrolyte precursor solution: stirring a reaction monomer vinylene carbonate (VC) and a cross-linking agent polyethylene glycol) diacrylate (PEGDA) completely for 4 h, adding them into a solvent (the solvent formula is a mixed solution of propylene carbonate (PC): ethylene carbonate (EC): dimethyl carbonate (DMC) with a volume ratio of 1:1:1), and then adding lithium hexafluorophosphate (LiPF₆) and an additive tris(2,2,2-trifluoroethyl)phosphite (TTFP), stirring completely; in electrolyte precursor solution, a content of a reaction monomer is 5 wt%; a content of a cross-linking agent is 1.2 wt%; a concentration of LiPF₆ is 1 mol/L, a content of an additive is 5 wt%, and a balance is solvent;
S7. preparing a battery: placing the cell obtained in S5 in an aluminum-plastic packaging bag, baking, then injecting the above electrolyte precursor solution, sealing, forming, aging at 50 °C, heating to 60 °C for thermal polymerization for 12 h, and then cooling to 50 °C and standing, to obtain the semi-solid state lithium ion battery.

### Example 3

A semi-solid state lithium ion battery comprises a cell and a gel electrolyte, wherein the cell comprises a cathode plate, an anode plate and a separator between the cathode and anode plate, and a three-dimensional network structure coating is set on the cathode plate. A preparation method for a semi-solid state lithium ion battery comprises following steps:
S 1. preparing a three-dimensional network structure coating slurry: adding cellulose nanocrystal of 0.3 kg, triethyl phosphate of 6 g and polyvinylidene fluoride (PVDF) binder of 0.03 kg to N-methyl-2-pyrrolidone (NMP) of 3.5 kg, and stirring them fully, then adding 30 g azobisisobutyronitrile initiator, and mixing them evenly to obtain the three-dimensional network structure coating slurry; a diameter of a fiber material cellulose nanocrystal is 50 nm-100 nm, and a length of a fiber material cellulose nanocrystal is 0.5 µm-2 µm;
S2. preparing a cathode plate: mixing a cathode active material NCM811, a conductive agent sp, a conductive agent carbon nanotubes, and a binder polyvinylidene fluoride evenly in N-methyl-2-pyrrolidone at a mass ratio of 96:2:0.5:1.5 to obtain a cathode slurry, coating the cathode slurry on one side of a current collector aluminum foil, drying and rolling at 120 °C, then coating and drying the cathode slurry on the other side of the aluminum foil according to the above method, and then carrying out cold pressing treatment on the plate of which the two sides of the aluminum foil are coated with a cathode active material layer, to obtain a lithium ion battery cathode;
S3. setting a three-dimensional network structure coating on the cathode plate: then, coating the three-dimensional network structure coating slurry on the cathode active material layer twice on both sides of the cathode plate by a transfer coating machine, and a drying temperature is 85 °C; after drying, a coating surface density of the three-dimensional network structure coating on either side of the cathode plate in thickness direction is 7.3 mg/cm², and a thickness of the three-dimensional network structure coating on either side of the cathode plate in thickness direction is 6 µm; after trimming and cutting, a cathode plate of a lithium ion battery with a total thickness of 127 µm is prepared;
S4. preparing an anode plate: mixing a silicon-carbon anode active material, a conductive agent sp, a thickener sodium carboxymethyl cellulose and a binder styrene butadiene rubber evenly in deionized water at a mass ratio of 96:1.5:1.0:1.5 to obtain an anode slurry, coating the anode slurry on one side of a current collector copper foil, drying and rolling at 105 °C, then coating and drying the anode slurry on the other side of the copper foil according to the above method, and then carrying out cold pressing treatment on the plate of which the two sides of the copper foil are coated with an anode active material layer, trimming and cutting, to obtain a lithium ion battery anode;
S5. preparing a cell: selecting polyethylene porous film with a thickness of 9 µm as a separator, winding the anode plate, the separator and the cathode plate set with the three-dimensional network structure coating into a cell, and a capacity of the cell is about 10 Ah, the separator is located between adjacent cathode and anode plate, the cathode plate is led out by spot welding of an aluminum electrode lug, and the anode plate is led out by spot welding of a nickel electrode lug;
S6. preparing an electrolyte precursor solution: stirring a reaction monomer vinylene carbonate (VC) and a cross-linking agent polyethylene glycol) diacrylate (PEGDA) completely for 4 h, adding them into a solvent (the solvent formula is a mixed solution of propylene carbonate (PC): ethylene carbonate (EC): dimethyl carbonate (DMC) with a volume ratio of 1:1:1), and then adding lithium hexafluorophosphate (LiPF₆) and an additive tris(2,2,2-trifluoroethyl)phosphite (TTFP), stirring completely; in electrolyte precursor solution, a content of a reaction monomer is 5 wt%; a content of a cross-linking agent is 1.2 wt%; a concentration of LiPF₆ is 1 mol/L, a content of an additive is 5 wt%, and a balance is solvent;
S7. preparing a battery: placing the cell obtained in S5 in an aluminum-plastic packaging bag, baking, then injecting the above electrolyte precursor solution, sealing, forming, aging at 40 °C, heating to 60 °C for thermal polymerization for 12 h, and then cooling to 40 °C and standing, to obtain the semi-solid state lithium ion battery.

### Example 4

A semi-solid state lithium ion battery comprises a cell and a gel electrolyte, wherein the cell comprises a cathode plate, an anode plate and a separator between the cathode and anode plate, and a three-dimensional network structure coating is set on the cathode plate. A preparation method for a semi-solid state lithium ion battery comprises following steps:
S 1. preparing a three-dimensional network structure coating slurry: adding polyester fiber of 0.3 kg, NASICON-type solid electrolytepowder lithium aluminum titanium phosphate (LATP, Li₁₊ₓTi₂₋ₓAlₓ(PO₄)₃) of 0.15 kg, triethyl phosphate of 6 g and polyvinylidene fluoride (PVDF) binder of 0.03 kg to N-methyl-2-pyrrolidone (NMP) of 3.5 kg, and stirring them fully, then adding 30 g azobisisobutyronitrile initiator, and mixing them evenly to obtain the three-dimensional network structure coating slurry; a diameter of polyester fiber is 50 nm-100 nm, and a length of polyester fiber is 0.5 µm-2 µm;
S2. preparing a cathode plate: mixing a cathode active material NCM811, a conductive agent sp, a conductive agent carbon nanotubes, and a binder polyvinylidene fluoride evenly in N-methyl-2-pyrrolidone at a mass ratio of 96:2:0.5:1.5 to obtain a cathode slurry, coating the cathode slurry on one side of a current collector aluminum foil, drying and rolling at 120 °C, then coating and drying the cathode slurry on the other side of the aluminum foil according to the above method, and then carrying out cold pressing treatment on the plate of which the two sides of the aluminum foil are coated with a cathode active material layer, to obtain a lithium ion battery cathode;
S3. setting a three-dimensional network structure coating on the cathode plate: then, coating the three-dimensional network structure coating slurry on the cathode active material layer twice on both sides of the cathode plate by a transfer coating machine, and a drying temperature is 95 °C; after drying, a coating surface density of the three-dimensional network structure coating on either side of the cathode plate in thickness direction is 9.3 mg/cm², and a thickness of the three-dimensional network structure coating on either side of the cathode plate in thickness direction is 6 µm; after trimming and cutting, a cathode plate of a lithium ion battery with a total thickness of 127 µm is prepared;
S4. preparing an anode plate: mixing a silicon-carbon anode active material, a conductive agent sp, a thickener sodium carboxymethyl cellulose and a binder styrene butadiene rubber evenly in deionized water at a mass ratio of 96:1.5:1.0:1.5 to obtain an anode slurry, coating the anode slurry on one side of a current collector copper foil, drying and rolling at 105 °C, then coating and drying the anode slurry on the other side of the copper foil according to the above method, and then carrying out cold pressing treatment on the plate of which the two sides of the copper foil are coated with an anode active material layer, trimming and cutting, to obtain a lithium ion battery anode;
S5. preparing a cell: selecting polyethylene porous film with a thickness of 9 µm as a separator, winding the anode plate, the separator and the cathode plate set with the three-dimensional network structure coating into a cell, and a capacity of the cell is about 10 Ah, the separator is located between adjacent cathode and anode plate, the cathode plate is led out by spot welding of an aluminum electrode lug, and the anode plate is led out by spot welding of a nickel electrode lug;
S6. preparing an electrolyte precursor solution: stirring a reaction monomer vinylene carbonate (VC) and a cross-linking agent polyethylene glycol) diacrylate (PEGDA) completely for 4 h, adding them into a solvent (the solvent formula is a mixed solution of propylene carbonate (PC): ethylene carbonate (EC): dimethyl carbonate (DMC) with a volume ratio of 1:1:1), and then adding lithium hexafluorophosphate (LiPF₆) and an additive tris(2,2,2-trifluoroethyl)phosphite (TTFP), stirring completely; in electrolyte precursor solution, a content of a reaction monomer is 5 wt%; a content of a cross-linking agent is 1.2 wt%; a concentration of LiPF₆ is 1 mol/L, a content of an additive is 5 wt%, and a balance is solvent;
S7. preparing a battery: placing the cell obtained in S5 in an aluminum-plastic packaging bag, baking, then injecting the above electrolyte precursor solution, sealing, forming, aging at 40 °C, heating to 60 °C for thermal polymerization for 12 h, and then cooling to 40 °C and standing, to obtain the semi-solid state lithium ion battery.

### Example 5

A semi-solid state lithium ion battery comprises a cell and a gel electrolyte, wherein the cell comprises a cathode plate, and an anode plate and a separator between the cathode and anode plate, and a three-dimensional network structure coating is set on the anode plate. A preparation method for a semi-solid state lithium ion battery comprises following steps:
S1. preparing a cathode plate: mixing a cathode active material NCM811, a conductive agent sp, a conductive agent carbon nanotubes, and a binder polyvinylidene fluoride evenly in N-methyl-2-pyrrolidone at a mass ratio of 96:2:0.5:1.5 to obtain a cathode slurry, coating the cathode slurry on one side of a current collector aluminum foil, drying and rolling at 120 °C, then coating and drying the cathode slurry on the other side of the aluminum foil according to the above method, and then carrying out cold pressing treatment on the plate of which the two sides of the aluminum foil are coated with a cathode active material layer, trimming and cutting, to obtain a lithium ion battery cathode;
S2. preparing a three-dimensional network structure coating slurry: adding cellulose nanofiber of 0.3 kg, triethyl phosphate of 6 g and styrene-butadiene rubber SBR binder of 0.03 kg to deionized water of 3.5 kg, and stirring them fully, then adding 30 g azobisisobutyronitrile initiator, and mixing them evenly to obtain the three-dimensional network structure coating slurry; a diameter of a fiber material cellulose nanofiber is 100 nm-200 nm, and a length of a fiber material cellulose nanofiber is 2 µm-5 µm;
S3. preparing an anode plate: mixing a silicon-carbon anode active material, a conductive agent sp, a thickener sodium carboxymethyl cellulose and a binder styrene butadiene rubber evenly in deionized water at a mass ratio of 96:1.5:1.0:1.5 to obtain an anode slurry, coating the anode slurry on one side of a current collector copper foil, drying and rolling at 105 °C, then coating and drying the anode slurry on the other side of the copper foil according to the above method, and then after carrying out cold pressing treatment on the plate of which the two sides of the copper foil are coated with an anode active material layer, to obtain a lithium ion battery anode;
S4. setting a three-dimensional network structure coating on the anode plate: then, coating the three-dimensional network structure coating slurry on the anode active material layer twice on both sides of the anode plate by a transfer coating machine, and a drying temperature is 85 °C; after drying, a coating surface density of the three-dimensional network structure coating on either side of the anode plate in thickness direction is 11 mg/cm², and a thickness of the three-dimensional network structure coating on either side of the anode plate in thickness direction is 9 µm; after trimming and cutting, an anode plate of a lithium ion battery with a total thickness of 105 µm is prepared;
S5. preparing a cell: selecting polyethylene porous film with a thickness of 9 µm as a separator, winding the cathode plate, the separator and the anode plate set with the three-dimensional network structure coating into a cell, and a capacity of the cell is about 10 Ah, the separator is located between adjacent cathode and anode plate, the cathode plate is led out by spot welding of an aluminum electrode lug, and the anode plate is led out by spot welding of a nickel electrode lug;
S6. preparing an electrolyte precursor solution: stirring a reaction monomer vinylene carbonate (VC) and a cross-linking agent polyethylene glycol) diacrylate (PEGDA) completely for 4 h, adding them into a solvent (the solvent formula is a mixed solution of propylene carbonate (PC): ethylene carbonate (EC): dimethyl carbonate (DMC) with a volume ratio of 1:1:1), and then adding lithium hexafluorophosphate (LiPF₆) and an additive tris(2,2,2-trifluoroethyl)phosphite (TTFP), stirring completely; in electrolyte precursor solution, a content of a reaction monomer is 5 wt%; a content of a cross-linking agent is 1.2 wt%; a concentration of LiPF₆ is 1 mol/L, a content of an additive is 5 wt%, and a balance is solvent;
S7. preparing a battery: placing the cell obtained in S5 in an aluminum-plastic packaging bag, baking, then injecting the above electrolyte precursor solution, sealing, forming, aging at 40 °C, heating to 60 °C for thermal polymerization for 12 h, and then cooling to 40 °C and standing, to obtain the semi-solid state lithium ion battery.

### Example 6

A semi-solid state lithium ion battery comprises a cell and a gel electrolyte, wherein the cell comprises a cathode plate, an anode plate and a separator between the cathode and anode plate, and a three-dimensional network structure coating is set on the cathode and anode plate. A preparation method for a semi-solid state lithium ion battery comprises following steps:
S1. preparing a three-dimensional network structure coating slurry on a cathode plate: adding cellulose nanofiber of 0.3 kg, triethyl phosphate of 6 g and polyvinylidene fluoride (PVDF) binder of 0.03 kg to N-methyl-2-pyrrolidone (NMP) of 3.5 kg, and stirring them fully, then adding 30 g azobisisobutyronitrile initiator, and mixing them evenly to obtain the three-dimensional network structure coating slurry; a diameter of a fiber material cellulose nanofiber is 50 nm-100 nm, and a length of a fiber material cellulose nanofiber is 0.5 µm-2 µm;
S2. preparing a cathode plate: mixing a cathode active material NCM811, a conductive agent sp, a conductive agent carbon nanotubes, and a binder polyvinylidene fluoride evenly in N-methyl-2-pyrrolidone at a mass ratio of 96:2:0.5:1.5 to obtain a cathode slurry, coating the cathode slurry on one side of a current collector aluminum foil, drying and rolling at 120 °C, then coating and drying the cathode slurry on the other side of the aluminum foil according to the above method, and then carrying out cold pressing treatment on the plate of which the two sides of the aluminum foil are coated with a cathode active material layer, to obtain a lithium ion battery cathode;
S3. setting a three-dimensional network structure coating on the cathode plate: then, coating the three-dimensional network structure coating slurry prepared by S1 on the cathode active material layer twice on both sides of the cathode plate by a transfer coating machine, and a drying temperature is 85 °C; after drying, a coating surface density of the three-dimensional network structure coating on either side of the cathode plate in thickness direction is 15 mg/cm², and a thickness of the three-dimensional network structure coating on either side of the cathode plate in thickness direction is 12 µm; after trimming and cutting, a cathode plate of a lithium ion battery with a total thickness of 127 µm is prepared;
S4. preparing a three-dimensional network structure coating slurry on an anode plate: adding cellulose nanofiber of 0.3 kg, triethyl phosphate of 6 g and styrene-butadiene rubber SBR binder of 0.03 kg to deionized water of 3.5 kg, and stirring them fully, then adding 30 g azobisisobutyronitrile initiator, and mixing them evenly to obtain the three-dimensional network structure coating slurry; a diameter of a fiber material cellulose nanofiber is 50 nm-100 nm, and a length of a fiber material cellulose nanofiber is 0.5 µm-2 µm;
S5. preparing an anode plate: mixing a silicon-carbon anode active material, a conductive agent sp, a thickener sodium carboxymethyl cellulose and a binder styrene butadiene rubber evenly in deionized water at a mass ratio of 96:1.5:1.0:1.5 to obtain an anode slurry, coating the anode slurry on one side of a current collector copper foil, drying and rolling at 105 °C, then coating and drying the anode slurry on the other side of the copper foil according to the above method, and then carrying out cold pressing treatment on the plate of which the two sides of the copper foil are coated with an anode active material layer;
S6. setting a three-dimensional network structure coating on the anode plate: then, coating the three-dimensional network structure coating slurry prepared in S4 on the anode active material layer twice on both sides of the anode plate by a transfer coating machine, and a drying temperature is 85 °C; after drying, a coating surface density of the three-dimensional network structure coating on either side of the anode plate in thickness direction is 7.3 mg/cm², and a thickness of the three-dimensional network structure coating on either side of the anode plate in thickness direction is 6 µm; after trimming and cutting, an anode plate of a lithium ion battery with a total thickness of 102 µm is prepared;
S7. preparing a cell: selecting polyethylene porous film with a thickness of 9 µm as a separator, winding the cathode plate prepared in S3 set with the three-dimensional network structure coating, the separator and the anode plate prepared in S6 set with the three-dimensional network structure coating into a cell, and a capacity of the cell is about 10 Ah, the separator is located between adjacent cathode and anode plate, the cathode plate is led out by spot welding of an aluminum electrode lug, and the anode plate is led out by spot welding of a nickel electrode lug;
S8. preparing an electrolyte precursor solution: stirring a reaction monomer vinylene carbonate (VC) and a cross-linking agent polyethylene glycol) diacrylate (PEGDA) completely for 4 h, adding them into a solvent (the solvent formula is a mixed solution of propylene carbonate (PC): ethylene carbonate (EC): dimethyl carbonate (DMC) with a volume ratio of 1:1:1), and then adding lithium hexafluorophosphate (LiPF₆) and an additive tris(2,2,2-trifluoroethyl)phosphite (TTFP), stirring completely; in electrolyte precursor solution, a content of a reaction monomer is 5 wt%; a content of a cross-linking agent is 1.2 wt%; a concentration of LiPF₆ is 1 mol/L, a content of an additive is 5 wt%, and a balance is solvent;
S9. preparing a battery: placing the cell obtained in S7 in an aluminum-plastic packaging bag, baking, then injecting the above electrolyte precursor solution, sealing, forming, aging at 40 °C, heating to 60 °C for thermal polymerization for 12 h, and then cooling to 40 °C and standing, to obtain the semi-solid state lithium ion battery.

### Example 7

A semi-solid state lithium ion battery comprises a cell and a gel electrolyte, wherein the cell comprises a cathode plate, an anode plate and a separator between the cathode and anode plate, and a three-dimensional network structure coating is set on the cathode and anode plate. A preparation method for a semi-solid state lithium ion battery comprises following steps:
S1. preparing a three-dimensional network structure coating slurry on a cathode plate: adding polyarylamide fiber of 0.3 kg, NASICON-type solid electrolyte powder lithium aluminum titanium phosphate (LATP, Li₁₊ₓTi₂₋ₓAlₓ(PO₄)₃) of 0.15 kg, triethyl phosphate of 6 g and polyvinylidene fluoride (PVDF) binder of 0.03 kg to N-methyl-2-pyrrolidone (NMP) of 3.5 kg, and stirring them fully, then adding 30 g azobisisobutyronitrile initiator, and mixing them evenly to obtain the three-dimensional network structure coating slurry; a diameter of polyarylamide fiber is 50 nm-100 nm, and a length of polyarylamide fiber is 0.5 µm-2 µm;
S2. preparing a cathode plate: mixing a cathode active material NCM811, a conductive agent sp, a conductive agent carbon nanotubes, and a binder polyvinylidene fluoride evenly in N-methyl-2-pyrrolidone at a mass ratio of 96:2:0.5:1.5 to obtain a cathode slurry, coating the cathode slurry on one side of a current collector aluminum foil, drying and rolling at 120 °C, then coating and drying the cathode slurry on the other side of the aluminum foil according to the above method, and then carrying out cold pressing treatment on the plate of which the two sides of the aluminum foil are coated with a cathode active material layer, to obtain a lithium ion battery cathode;
S3. setting a three-dimensional network structure coating on the cathode plate: then, coating the three-dimensional network structure coating slurry prepared by S1 on the cathode active material layer twice on both sides of the cathode plate by a transfer coating machine, and a drying temperature is 95 °C; after drying, a coating surface density of the three-dimensional network structure coating on either side of the cathode plate in thickness direction is 9.3 mg/cm², and a thickness of the three-dimensional network structure coating on either side of the cathode plate in thickness direction is 6 µm; after trimming and cutting, a cathode plate of a lithium ion battery with a total thickness of 127 µm is prepared;
S4. preparing a three-dimensional network structure coating slurry on an anode plate: adding polyarylamide fiber of 0.3 kg, perovskite-type solid electrolyte lithium lanthanum titanate powder (LLTO, Li₃ₓLa_{(2/3)-x}TiO₃) of 0.15 kg, triethyl phosphate of 6 g and styrene-butadiene rubber SBR binder of 0.03 kg to deionized water of 3.5 kg, and stirring them fully, then adding 30 g azobisisobutyronitrile initiator, and mixing them evenly to obtain the three-dimensional network structure coating slurry; a diameter of polyarylamide fibe is 50 nm-100 nm, and a length of polyarylamide fibe is 0.5 µm-2 µm;
S5. preparing an anode plate: mixing a silicon-carbon anode active material, a conductive agent sp, a thickener sodium carboxymethyl cellulose and a binder styrene butadiene rubber evenly in deionized water at a mass ratio of 96:1.5:1.0:1.5 to obtain an anode slurry, coating the anode slurry on one side of a current collector copper foil, drying and rolling at 105 °C, then coating and drying the anode slurry on the other side of the copper foil according to the above method, and then carrying out cold pressing treatment on the plate of which the two sides of the copper foil are coated with an anode active material layer;
S6. setting a three-dimensional network structure coating on the anode plate: then, coating the three-dimensional network structure coating slurry prepared in S4 on the anode active material layer twice on both sides of the anode plate by a transfer coating machine, and a drying temperature is 95 °C; after drying, a coating surface density of the three-dimensional network structure coating on either side of the anode plate in thickness direction is 9.3 mg/cm², and a thickness of the three-dimensional network structure coating on either side of the anode plate in thickness direction is 6 µm; after trimming and cutting, an anode plate of a lithium ion battery with a total thickness of 102 µm is prepared;
S7. preparing a cell: selecting polyethylene porous film with a thickness of 9 µm as a separator, winding the cathode plate prepared in S3 set with the three-dimensional network structure coating, the separator and the anode plate prepared in S6 set with the three-dimensional network structure coating into a cell, and a capacity of the cell is about 10 Ah, the separator is located between adjacent cathode and anode plate, the cathode plate is led out by spot welding of an aluminum electrode lug, and the anode plate is led out by spot welding of a nickel electrode lug;
S8. preparing an electrolyte precursor solution: stirring a reaction monomer vinylene carbonate (VC) and a cross-linking agent polyethylene glycol) diacrylate (PEGDA) completely for 4 h, adding them into a solvent (the solvent formula is a mixed solution of propylene carbonate (PC): ethylene carbonate (EC): dimethyl carbonate (DMC) with a volume ratio of 1:1:1), and then adding lithium hexafluorophosphate (LiPF₆) and an additive tris(2,2,2-trifluoroethyl)phosphite (TTFP), stirring completely; in electrolyte precursor solution, a content of a reaction monomer is 5 wt%; a content of a cross-linking agent is 1.2 wt%; a concentration of LiPF₆ is 1 mol/L, a content of an additive is 5 wt%, and a balance is solvent;
S9. preparing a battery: placing the cell obtained in S7 in an aluminum-plastic packaging bag, baking, then injecting the above electrolyte precursor solution, sealing, forming, aging at 40 °C, heating to 60 °C for thermal polymerization for 12 h, and then cooling to 40 °C and standing, to obtain the semi-solid state lithium ion battery.

### Example 8

The difference between the preparation method of this Example and that of Example 2 is that, an equal amount of glass fiber is used to replace a cellulose nanofiber in the preparation of a three-dimensional network structure coating, and the rest is the same as that of Example 2 to obtain a semi-solid state lithium ion battery.

### Example 9

The difference between the preparation method of this Example and that of Example 2 is that, an amount of an initiator added is 6 g in the preparation of a three-dimensional network structure coating, and the rest is the same as that of Example 2 to obtain a semi-solid state lithium ion battery.

### Example 10

The difference between the preparation method of this Example and that of Example 2 is that, an amount of an initiator added is 90 g in the preparation of a three-dimensional network structure coating, and the rest is the same as that of Example 2 to obtain a semi-solid state lithium ion battery.

### Example 11

The difference between the preparation method of this Example and that of Example 2 is that, an amount of an initiator azobisisobutyronitrile added is 3 g in the preparation of a three-dimensional network structure coating, and the rest is the same as that of Example 2 to obtain a semi-solid state lithium ion battery.

### Example 12

The difference between the preparation method of this Example and that of Example 2 is that, an amount of an initiator azobisisobutyronitrile added is 120 g in the preparation of a three-dimensional network structure coating, and the rest is the same as that of Example 2 to obtain a semi-solid state lithium ion battery.

### Example 13

The difference between the preparation method of this Example and that of Example 2 is that, in the preparation of a three-dimensional network structure coating, a coating surface density of a three-dimensional network structure coating on one side after drying is 1.5 mg/cm², and a thickness of a three-dimensional network structure coating on one side is 2 µm, and the rest is the same as that of Example 2 to obtain a semi-solid state lithium ion battery.

### Example 14

The difference between the preparation method of this Example and that of Example 2 is that, in the preparation of a three-dimensional network structure coating, a coating surface density of a three-dimensional network structure coating on one side after drying is 25 mg/cm², and a thickness of a three-dimensional network structure coating on one side is 20 µm, and the rest is the same as that of Example 2 to obtain a semi-solid state lithium ion battery.

### Comparative Example 1

A semi-solid state lithium ion battery comprises a cell and a gel electrolyte, wherein the cell comprises a cathode plate, an anode plate and a separator between the cathode and anode plate. A preparation method for a semi-solid state lithium ion battery comprises following steps:
S1. preparing a cathode plate: mixing a cathode active material NCM811, a conductive agent sp, a conductive agent carbon nanotubes, and a binder polyvinylidene fluoride evenly in N-methyl-2-pyrrolidone at a mass ratio of 96:2:0.5:1.5 to obtain a cathode slurry, coating the cathode slurry on one side of a current collector aluminum foil, drying and rolling at 120 °C, then coating and drying the cathode slurry on the other side of the aluminum foil according to the above method, and then carrying out cold pressing treatment on the plate of which the two sides of the aluminum foil are coated with a cathode active material layer, trimming and cutting, to obtain a lithium ion battery cathode;
S2. preparing an anode plate: mixing a silicon-carbon anode active material, a conductive agent conductive carbon black (sp), a thickener sodium carboxymethyl cellulose and a binder styrene butadiene rubber evenly in deionized water at a mass ratio of 96:1.5:1.0:1.5 to obtain an anode slurry, coating the anode slurry on one side of a current collector copper foil, drying and rolling at 105 °C, then coating and drying the anode slurry on the other side of the copper foil according to the above method, and then after carrying out cold pressing treatment on the plate of which the two sides of the copper foil are coated with an anode active material layer, trimming and cutting, an anode plate of a lithium ion battery with a total thickness of 102 µm is prepared;
S3. preparing a cell: selecting polyethylene porous film with a thickness of 9 µm as a separator, winding the cathode plate, the separator and the anode plate into a cell, and a capacity of the cell is about 10 Ah, the separator is located between adjacent cathode and anode plate, the cathode plate is led out by spot welding of an aluminum electrode lug, and the anode plate is led out by spot welding of a nickel electrode lug;
S4. preparing electrolyte precursor solution: the preparation of electrolyte precursor solution in this Comparative Example is the same as that in Example 1, except that 30 g of azobisisobutyronitrile is additionally added to electrolyte precursor solution, a content of azobisisobutyronitrile in electrolyte precursor solution is 10 wt %;
S5. preparing a battery: placing the cell obtained in S3 in an aluminum-plastic packaging bag, baking, then injecting the above electrolyte precursor solution, sealing, forming, aging at 40 °C, heating to 60 °C for thermal polymerization for 12 h, and then cooling to 40 °C and standing, to obtain the semi-solid state lithium ion battery.

### Comparative Example 2

A semi-solid state lithium ion battery comprises a cell and a gel electrolyte, wherein the cell comprises a cathode plate, an anode plate and a separator between the cathode and anode plate, a three-dimensional network structure coating is set on the anode plate, and the coating does not comprise an initiator. A preparation method for a semi-solid state lithium ion battery comprises following steps:
S1. preparing a cathode plate: mixing a cathode active material NCM811, a conductive agent sp, a conductive agent carbon nanotubes, and a binder polyvinylidene fluoride evenly in N-methyl-2-pyrrolidone at a mass ratio of 96:2:0.5:1.5 to obtain a cathode slurry, coating the cathode slurry on one side of a current collector aluminum foil, drying and rolling at 120 °C, then coating and drying the cathode slurry on the other side of the aluminum foil according to the above method, and then after carrying out cold pressing treatment on the plate of which the two sides of the aluminum foil are coated with a cathode active material layer, trimming, cutting and slitting, to obtain a lithium ion battery cathode;
S2. preparing an anode plate: preparing a three-dimensional network structure coating slurry: adding cellulose nanofiber of 0.3 kg, triethyl phosphate of 6 g and styrene butadiene rubber SBR binder of 0.03 kg to deionized water of 3.5 kg, and stirring them fully to obtain the three-dimensional network structure coating slurry; a diameter of a fiber material cellulose nanofiber is 50-100 nm, and a length of a fiber material cellulose nanofiber is 0.5 µm-2 µm;
mixing a silicon-carbon anode active material, a conductive agent sp, a thickener sodium carboxymethyl cellulose and a binder styrene butadiene rubber evenly in deionized water at a mass ratio of 96:1.5:1.0:1.5 to obtain an anode slurry, coating the anode slurry on one side of a current collector copper foil, drying and rolling at 105 °C, then coating and drying the anode slurry on the other side of the copper foil according to the above method, and then carrying out cold pressing treatment on the plate of which the two sides of the copper foil are coated with an anode active material layer, to obtain a lithium ion battery anode; then, coating the three-dimensional network structure coating slurry twice on both sides of the anode plate by a transfer coating machine, and a drying temperature is 85 °C; after drying, a surface density of the three-dimensional network structure coating is 7.3 mg/cm², and a thickness of the three-dimensional network structure coating on either side of the anode plate in thickness direction is 6 µm; after trimming, cutting and slitting, an anode plate of a lithium ion battery with a total thickness of 102 µm is prepared;
S3. preparing a cell: selecting polyethylene porous film with a thickness of 9 µm as a separator, winding the cathode plate, the separator and the anode plate into a cell, and a capacity of the cell is about 10 Ah, the separator is located between adjacent cathode and anode plate, the cathode plate is led out by spot welding of an aluminum electrode lug, and the anode plate is led out by spot welding of a nickel electrode lug;
S4. preparing electrolyte precursor solution: the preparation of electrolyte precursor solution in this Comparative Example is the same as that in Example 1, except that 30 g of azobisisobutyronitrile is additionally added to electrolyte precursor solution, a content of azobisisobutyronitrile in electrolyte precursor solution is 10 wt %;
S5. preparing a battery: placing the cell obtained in S3 in an aluminum-plastic packaging bag, baking, then injecting the above electrolyte precursor solution, sealing, forming, aging at 40 °C, heating to 60 °C for thermal polymerization for 12 h, and then cooling to 40 °C and standing, to obtain the semi-solid state lithium ion battery.

### Comparative Example 3

The difference between the preparation method of this Comparative Example and that of Example 1 is that cellulose nanofiber is not added during the preparation of a three-dimensional network structure coating. The rest is the same as that of Example 1, and a semi-solid state lithium ion battery is prepared.

Performance testing: a semi-solid state lithium ion battery prepared in the above Examples and Comparative Examples is subjected to the following tests:
Specific capacity test: 0.33 C constant voltage and constant current to 0.05 C for full charge to 4.2 V, and discharge to 2.5 V at 1 C to get the discharge capacity, then the specific capacity is obtained by dividing the discharge capacity by a mass of a cathode active material (a cathode active material is a material in a cathode active layer except a conductive agent and a binder, for example, a mass of a cathode active material is a mass ofNCM811 in Example 1).

First efficiency test: 0.33 C constant voltage and constant current to 0.05 C for full charge to 4.2 V, to get the charge capacity, then discharge to 2.5 V at 1 C, get the discharge capacity, the ratio of the discharge capacity to the charge capacity is the first efficiency.

DC internal resistance test: 0.33 C constant voltage and constant current to 0.05 C for full charge to 4.2 V, discharge at 2 C for 30 s, subtract the voltage after 30 s of discharge from the voltage before 30 s of discharge to get the voltage difference, then divide the voltage difference by the discharge current to get the DC internal resistance.

Needle puncture test: the needle puncture test is carried out on a safety testing machine. Specifically, a 5 mm~8 mm high-temperature resistant steel needle (the cone angle of the needle tip is 45 °~60 °, the surface of the needle is smooth, free of rust, oxide layer and oil) is used to penetrate the battery at a speed of 25 mm/s from a direction perpendicular to the large surface of the battery. The penetration position should be close to the geometric center of the punctured surface, and the steel needle stays in the battery. The standard for passing the needle puncture is no smoke or fire.

The results of the above tests are shown in Table 1.

**Table 1: Electrical and safety performance test results of the Examples and Comparative Examples**

| | Specific capacity /mAh/g | First efficiency /% | DC resistance /mΩ | Puncture pass rate /% |
|---|---|---|---|---|
| Example 1 | 176.2 | 80.1 | 30.8 | 75% |
| Example 2 | 178.4 | 81.2 | 28.6 | 90% |
| Example 3 | 176.6 | 80.3 | 30.3 | 80% |
| Example 4 | 179.4 | 81.7 | 28.4 | 95% |
| Example 5 | 175.6 | 79.8 | 32.6 | 85% |
| Example 6 | 168.8 | 76.4 | 35.5 | 97% |
| Example 7 | 170.2 | 77.1 | 32.9 | 95% |
| Example 8 | 173.4 | 78.8 | 34.1 | 75% |
| Example 9 | 173.5 | 78.8 | 31.8 | 60% |
| Example 10 | 172.9 | 75.6 | 35.1 | 85% |
| Example 11 | 171.4 | 75.7 | 28.3 | 30% |
| Example 12 | 152.3 | 62.3 | 45 | 95% |
| Example 13 | 172.1 | 78.2 | 30.5 | 20% |
| Example 14 | 134.7 | 61.2 | 42 | 85% |
| Comparative Example 1 | 170.8 | 77.6 | 34.7 | 25% |
| Comparative Example 2 | 160.4 | 72.9 | 32.4 | 35% |
| Comparative Example 3 | 166.4 | 75.6 | 48.4 | 60% |

As shown in Table 1, a semi-solid state battery of Examples 1-10 of the present invention has good electrical properties and safety properties. In Comparative Example 1, since a three-dimensional network structure coating is not set, the safety of a semi-solid state battery is significantly reduced. In Comparative Example 2, an initiator is placed in electrolyte solution, and the degree of aggregation of the gel electrolyte cannot be effectively controlled, resulting in a decrease in the electrical performance and safety of a semi-solid state battery. In Comparative Example 3, there is no fiber material to be added to a coating, and an initiator cannot be anchored in the coating, resulting in a significant decrease in the electrical performance of a semi-solid state battery and a synchronous decrease in safety performance.

Finally, it should be noted that the above embodiments are only used to illustrate the technical solution of the present invention rather than to limit the scope of protection of the present invention. Although the present invention has been described in detail with reference to the preferred embodiments, those skilled in the art should understand that the technical solution of the present invention can be modified or replaced by equivalents without departing from the essence and scope of the technical solution of the present invention.

## Claims

1. A semi-solid state battery, the semi-solid state battery comprises a cell and a gel electrolyte, the cell comprises a cathode plate and an anode plate, wherein a three-dimensional network structure coating is set on the cathode plate and/or the anode plate; raw materials for preparing the three-dimensional network structure coating comprise: a fiber material and an initiator; the gel electrolyte is condensed by a reaction of electrolyte precursor solution and the initiator; and the electrolyte precursor solution comprises: a monomer and a cross-linking agent.

2. The semi-solid state battery according to claim 1, wherein the preparation method for the three-dimensional network structure coating comprises: dispersing the fiber material and the initiator in a solvent I, stirring evenly, then coating it on the cathode plate and/or the anode plate, and drying; and a mass ratio of the fiber material to the initiator is 1: (0.02-0.3).

3. The semi-solid state battery according to claim 1 or 2, wherein the raw materials for preparing the three-dimensional network structure coating also comprise a ceramic material.

4. The semi-solid state battery according to claim 3, wherein the raw materials for preparing the three-dimensional network structure coating also comprise a dispersant and a binder; and a mass ratio of the fiber material, the dispersant, the binder, and the ceramic material is 1: (0-0.05): (0.01-0.2): (0-5).

5. The semi-solid state battery according to claim 4, wherein at least one of the following is satisfied:
(1-1) the fiber material comprises at least one of cellulose nanofibers, cellulose nanocrystals, glass fibers, silica nanofibers, silicate fiber materials, polyester fibers, and polyarylamide;
(1-2) the initiator comprises at least one of azobisisobutyronitrile, azobisisoheptanenitrile, 2-methylpropionate, benzoyl peroxide, tert-butyl peroxybenzoate, 2-butanone peroxide, stannous octoate, lithium acetate, triethylphosphine, triphenylphosphine, tributylphosphine, bis(tributyltin) oxide, tetrabutyl titanate, zirconium n-butoide, trialkyltin alkoxide, dialkyltin oxide, N-methylethylenediamine, dimethylformamide, triethylene ethylenediamine, N-methyldiethanolamine, triethylenediamine, aluminum trifluoromethanesulfonate, magnesium trifluoromethanesulfonate, lithium bis(fluorosulfonyl)imide and stannous trifluoromethanesulfonate;
(1-3) the dispersant comprises at least one of isopropyl alcohol, triolein, oleic acid, terpineol, triethyl phosphate, triethylhexyl phosphate, sodium dodecyl sulfate, 4-methyl-2-pentanol, cellulose derivatives, polyacrylamide, and polyethylene glycol fatty acid;
(1-4) the binder comprises at least one of polyvinylidene fluoride, poly(methyl methacrylate), polyacrylonitrile, polyimide, styrene butadiene rubber, poly(acrylic acid), and sodium carboxymethyl cellulose.

6. The semi-solid state battery according to any one of claims 1-5, wherein a diameter of the fiber material is 50 nm-200 nm and a length of the fiber material is 0.5 µm-5 µm.

7. The semi-solid state battery according to any one of claims 1-6, wherein a thickness of the three-dimensional network structure coating on either side of the cathode plate or the anode plate in thickness direction is 3 µm-20 µm, and a coating surface density of the three-dimensional network structure coating on either side of the cathode plate or the anode plate in thickness direction is 2 mg/cm²-17 mg/cm².

8. The semi-solid state battery according to any one of claims 1-7, wherein the electrolyte precursor solution further comprises an alkali metal salt, an additive and a solvent II; by mass percentage, the electrolyte precursor solution comprises: 0.7-1.5 mol/L of the alkali metal salt, 0.5%-5% of the additives, 3%-7% of the monomer and 0.2%-1.5% of the cross-linking agent, and a balance is the solvent II.

9. The semi-solid state battery according to claim 8, wherein at least one of the following is satisfied:
(2-1) the solvent II comprises at least one of vinylene carbonate, propylene carbonate, diethyl carbonate, ethyl methyl carbonate, dimethyl carbonate, methylpropyl carbonate, ethyl propionate, propyl propionate, ethyl acetate, ethyl butyrate, propyl acetate, γ-butyrolactone, fluoroethylene carbonate, fluoropropylene carbonate, 3,3,3-trifluoropropylene carbonate, methyl 2,2,2-trifluoroethyl ester and bis (2,2,2-trifluoroethyl) carbonate;
(2-2) the alkali metal salt comprises one of a lithium salt, a potassium salt and a sodium salt;
(2-3) the additive comprises at least one of tris(2,2,2-trifluoroethyl)phosphite, fluoroethylene carbonate, vinylene carbonate, di-fluoro ethylene carbonate, ethylene sulfate, prop-1-ene-1,3-sultone, haloalkyl phosphate;
(2-4) the monomer comprises at least one of vinyl acetate, dimethyl allylmalonate, diethyl allylmalonate, dimethallyl carbonate, 1,4-butanediol diacrylate, hexamethylene diacrylate, methyl methacrylate, butyl methacrylate, vinylene carbonate, 4-vinyl-1,3-dioxolan-2-one, methyl vinyl sulfone, ethyl vinyl sulfone, ethoxylated trimethylolpropane triacrylate, pentaerythritol triacrylate, pentaerythritol tetraacrylate, dipentaerythritol pentaacrylate, dipentaerythritol hexaacrylate, acrylamide, N,N-methylenebisacrylamide, caprolactam, 2-pyrrolidinone, maleic anhydride, acrylonitrile, ethyl 2-cyanoacrylate, enbucrilate, octocrylene, 1-cyclohexene-1-acetonitrile, hexafluorobutyl methacrylate, trifluoroethyl methacrylate, polyethylene glycol) methacrylate, poly(ethylene glycol) dimethacrylate, poly(ethylene glycol) diacrylate, ethoxyethyl acrylate, polyethylene glycol, 1,3 dioxolane, 1,4-dioxane, vinylmethoxysilane, 2-(trimethylsiloxy)ethyl methacrylate, trivinylcyclotrisiloxane, vinyl tris(2-methoxyethoxy) silane;
(2-5) the crosslinking agent comprises at least one of poly(ethylene glycol) diacrylate, poly(ethylene glycol) dimethacrylate, trimethylolpropane trimethacrylate, pentaerythritol tetraacrylate, pentaerythritol triacrylate, ethoxylated trimethylolpropane triacrylate and polyether acrylate.

10. A preparation method for the semi-solid state battery according to any one of claims 1 to 9, wherein the preparation method comprises the following steps:
S1: applying a three-dimensional network structure coating slurry on the surface of the cathode plate and/or the anode plate, and drying it;
S2: making the cathode plate, the anode plate obtained in S1 into a cell;
S3: injecting the electrolyte precursor solution into the cell, sealing, aging, heating to 40 °C-90 °C for thermal polymerization for 20 min-48 h, cooling and standing to obtain the semi-solid-state battery.
